(19) Europäisches Patentamt
European Patent Office
Office européen des brevets

(11) Publication number : **0 416 031 B1**

(12) **EUROPEAN PATENT SPECIFICATION**

(45) Date of publication of patent specification :
29.03.95 Bulletin 95/13

(51) Int. Cl.[6] : **F16J 15/10**

(21) Application number : **89907036.1**

(22) Date of filing : **25.05.89**

(86) International application number :
**PCT/US89/02302**

(87) International publication number :
**WO 89/11608 30.11.89 Gazette 89/28**

(54) **GASKETING PRODUCT.**

(30) Priority : **25.05.88 US 198532**

(43) Date of publication of application :
**13.03.91 Bulletin 91/11**

(45) Publication of the grant of the patent :
**29.03.95 Bulletin 95/13**

(84) Designated Contracting States :
**DE FR GB IT SE**

(56) References cited :
**US-A- 4 070 219**
**US-A- 4 187 390**

(73) Proprietor : **W.L. GORE & ASSOCIATES, INC.**
**551 Paper Mill Road,**
**P.O. Box 9206**
**Newark, Delaware 19714-9206 (US)**

(72) Inventor : **SNYDER, Ritchie, Alan**
**108 Montchanin Road**
**Wilmington, DE 19807 (US)**

(74) Representative : **Horner, Martin Grenville et al**
**Cruikshank & Fairweather**
**19 Royal Exchange Square**
**Glasgow G1 3AE Scotland (GB)**

## Description

This invention relates to a gasketing material having variable density across its cross-section, functional over a wide temperature range and inert to most chemicals and capable of maintaining structural integrity, rigidity, and sealability. The invention provides an insertable gasket comprised of expanded polytetrafluoroethylene (hereinafter PTFE) and the manufacture thereof. A gasket as defined in the first part of claim 1 is known from US-A 4070219.

There exist many applications where a gasketing material is required to be rigid such that it can be placed in a specified location with a specific shape and not deform under its own weight. An example of a rigid gasket is one placed between two adjacent pipe flanges.

A gasket having structural rigidity is also desirable for robotic applications or with the use of automatic equipment. The gasket must be structurally rigid so that when handling, it does not deform thereby rendering itself defective. One drawback of such gaskets however is that they are not easily compressible and thus fail to adequately seal any rough surface.

Gaskets are also available that are highly compressible so that they can conform and seal irregular shapes and surfaces. These type of gaskets suffer however in that they are not rigid and thus deform under their own weight.

As such, commercially available gaskets are categorized into two broad groups, namely:

1. Very rigid and stiff requiring high compressive loads during service in the range of as high as 10,000 psi ($69.10^6$ Pa) to acquire a desired seal. Gaskets falling into this category include for example: Compressed asbestos, metal-jacketed gaskets, and spiral wound gaskets and;

2. Highly compressible gaskets that tend to be non-rigid, but easily conformable to irregularities on rough or smooth surfaces using low compressive loads. Gaskets falling into this category include for example: Joint Sealant such as that commercially available from W. L. Gore & Associates, Inc. Newark, DE and Liquid Room Temperature Vulcanization (RTV) silicone gaskets.

In certain applications, such as with glass-lined pipes, glass-lined vessels, and other glass-lined entities with irregular bolt patterns, high compressive loads cannot be achieved without distortion or deformation of the workpiece. It is very difficult with insertable gaskets presently available to achieve the desired seals without damaging the workpiece. Typically, one type of gasket is not functional over a range of temperatures from -450°F to +600°F (-250°C to +320°C) and simultaneously over a wide range of compressible loads. A multiplicity of gaskets comprised of varying materials would have to be used to provide sealing capabilities over the wide temperature range and wide compressive loads.

According to the present invention there is provided a gasket having the features as defined within claim 1.

A rigid and compressible gasket of the invention consists of porous PTFE that has density in one region greater than the density in another region of the gasket. The gasket also provides capability of providing a compressible seal over a range of temperatures from -450°F to over +600°F. The PTFE may also contain a filler such as carbon, graphite, silica, asbestos, pigments or other materials. A preferable embodiment of this invention is an insertable gasket and may be of any shape. The gasket may also be provided with holding means such as tabs or bolt holders for easy insertion into a workpiece.

Embodiments of the present invention will now be described, by way of example, with reference to the accompanying drawings, in which:-

Figure 1 is a top view of the invention in the form of an insertable gasket.

Figure 1a is an enlarged cross-sectional view of the invention taken along line 1A-1A of Figure 1.

Figure 2 is a top view of a second embodiment of the invention.

Figure 2a is an enlarged cross-sectional view of the second embodiment taken along line 2A-2A of Figure 2.

Figure 3 is a pictorial view of a third embodiment of the invention.

Figure 3a is a top plan view partially broken away to show the densified and undensified regions of the third. embodiment.

Figure 4 is a top plan view of the outershell die used to make the invention.

Figure 4a is a cross-sectional view to show the die and material placement within the die taken along line 4A of Figure 4.

Figure 5 is a bottom view of the inner shell die used to make the invention.

Figure 5a is a side elevational view partially broken away to show the inner die.

Figure 6 is a schematic sideview of the test equipment used in Example 2.

Figures 7 through 15 are graphs of sealability test results comparing the inventive gaskets with commercially available gaskets as described in Example 2.

This invention relates to the manufacture and article made therefrom of a gasket comprised of porous polymeric material in form of polytetrafluoroethylene (PTFE) having varying density. The polymeric material is porous PTFE made in accordance with US Patent No. 4,187,390. US Patent 4,187,390 is herein incorporated by reference. Alternatively, porous PTFE made by any other method is also suitable. Also, the porous PTFE may be either heat treated to amorphously lock the material or may not be heat treated at all or partially heat treated. In particular, the inventive gasket is comprised entirely of porous PTFE wherein predetermined areas of the gasket are densified or are densified to a greater degree than other areas resulting in a product that has a combination of high density and low density regions. By densifying the gasketing material in a selected pattern, the overall gasket is provided with sufficient rigidity and self-integrity so that it does not deform under its own weight. At the same time, however, the undensified regions of the gasketing material provides for the gasket to be highly compressible and thus provides for good sealing at relatively low sealing forces.

The porous PTFE used in this invention may also contain fillers such as graphite, carbon black, asbestos, silica, pigment, mica, titanium dioxide, glass, potassium titanate, dielectric fluid and polysiloxane.

The inventive gasket may be used in a variety of applications to seal two adjoining surfaces whether the article be placed as a permanent fixture to the workpieces or whether it be used as a replaceable or insertable article so that when a gasket needs to be replaced, the inventive article may be inserted or replaced.

The shape of the gasket may be circular, rectangular, or have any other geometric shape. Alternatively, the gasket may be in the shape of an O-ring (i.e. closed loop) or be a long strip.

The gasket may also be provided with holding means such as tabs or bolt holders for easy insertion in a workpiece. These holding means may be attached by mechanical means, adhesives, bonding agents, or any material causing the holding means to be adhered to the gasket.

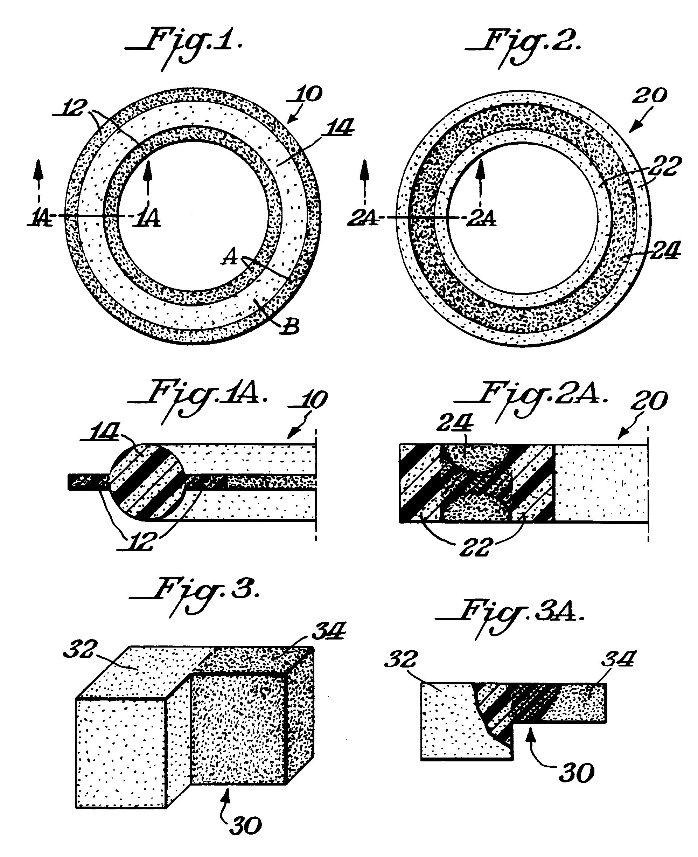

The invention may best be understood by reference to the accompanying drawings. Figure 1 is a graphical top view of one embodiment of the invention as an insertable gasket 10 wherein the gasket is in the shape of an O-ring.

The heavily dotted region 12 of the gasket 10 shows the densified region of the gasket in which the porous PTFE has more than about twice the density of the center region 14 of the gasket. The pattern of the densified segment of the gasket may vary so that it covers substantially the overall surface area or in the alternative, covers only a minimal portion of the surface area.

An enlarged cross-section of the gasket is seen in Figure 1a. Gasket 10 is comprised of expanded porous PTFE wherein the edges 12 have a density greater than that of the central potion of the gasket 14. Such a gasket with a pattern of variable density regions provides for structural rigidity in the high density regions and allows low density regions to retain areas of high compressibility and high sealing characteristics thereby rendering itself an excellent material for insertable gaskets. The regions of high density provide rigidity to the gasket such that it will not deform under its own weight but rather will retain its original shape.

The high compressibility characteristics permit low density expanded PTFE to conform easily to irregular surfaces and to compress into a thin ribbon under pressure. This results in maximum sealing with the compressible material.

Figure 2 is a top view of a second embodiment of a gasket 20 showing a densified region 24 in the center of the O-shaped ring depicted by heavy dotting and having the porous PTFE of low density at the inner and outer edges 22.

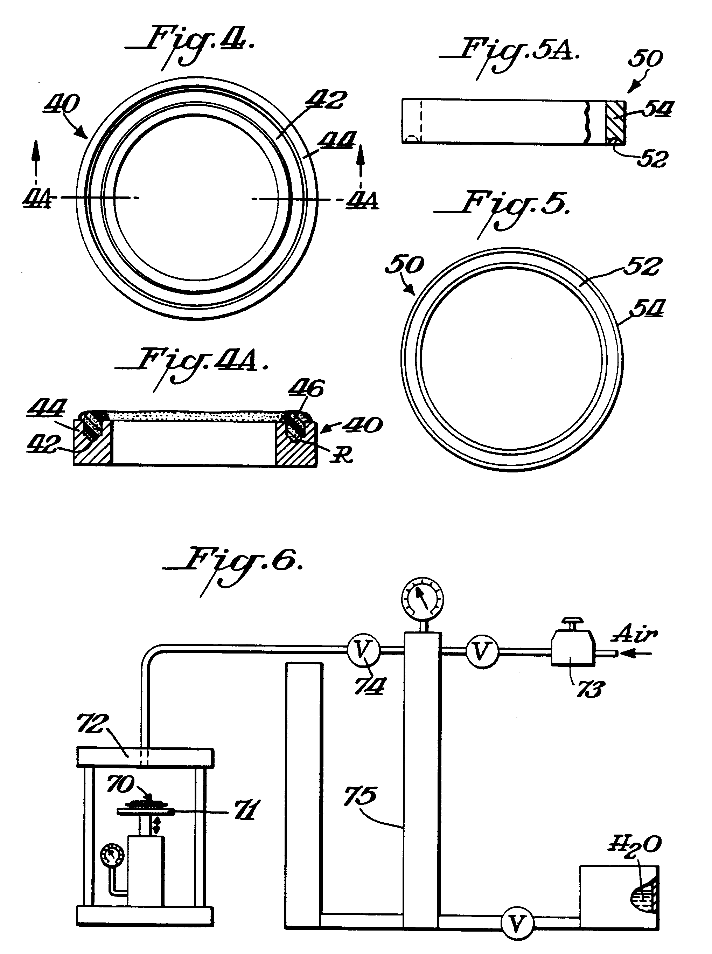

Alternative to the circular shaped gaskets previously described, Figure 3 shows a rectangular gasket wherein one region 34 is comprised of a porous PTFE material having a density greater than the density in another region 32. Figure 3a shows a top plan view partially broken away to show a gasket wherein one region 34 has a density greater than that of region 32.

To construct a gasket with varying density, reference is made of Figure 4. A rod of porous PTFE material 46 is fitted into the well 42 of die 40. The volume of the rod 46 is greater than that of the die so that the edges of the rod overlap the horizontal edges 44 of the die as shown in Figure 4a.

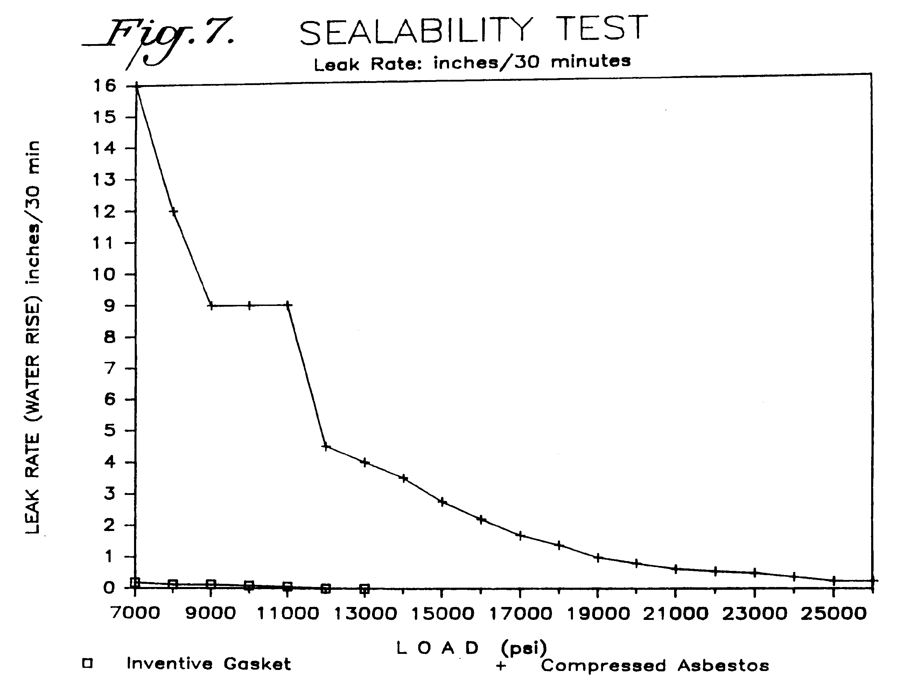

A second inner shell die 50 shown in Figure 5 is placed on top of the outer shell 40 contained the rod. The inner shell 50 should fit snugly within the outer shell 40 so to be in contact with the polymeric rod 46. A well 52 is also molded in die 50. In this case, pressure greater than $14.10^6$ Pa (2100psi) was applied to the inner and outer shell, thereby selectively densifying regions of the PTFE material. Figure 5a shows a side elevational view partially broken away to show the inner die and well. The cross-hatched area of 54 in Figure 5a fits directly over and covers the surface of the cross-hatched area of Figure 4a.

An alternative and more preferred method is to use the dies as described above with a combination application of heat and pressure. Using this method, the die containing the porous PTFE material is heated by a heating means to above room temperature, preferably so that the die is heated to a temperature of 400°C for about 15 minutes. Simultaneous with the heating step, pressure is applied. For a die heated to about 400°C, minimum pressure of about 1130 psi ($8.10^6$ Pa) is necessary, although higher pressure loads may be applied.

The resulting selectively densified PTFE material may be used as is or may be further modified into a desired shape. A particularly useful shape for the material is a closed loop or 0-ring, wherein the ends of the rod are joined together under pressure and/or heat, or with the use of an adhesive, bonding agent or other means available for joining polymeric materials.

Preferably, the seam where the two ends are joined remains the same volume as the rest of the gasket so that there is no discontinuity in shape. One method to maintain the volume is to taper the ends to be joined so they fit snugly together without overlap and thus without an increase in diameter and volume.

The resulting selectively densified gasket has patterned regions of high density that provide rigidity in that the gasket can support itself under its own weight and thus provide for goods handling characteristics. Coincidentally, the regions of the gasket that had not been densified provide for greater compressibility in the workpiece so as to form a tight seal. The porous PTFE material from which these gaskets are made makes the gasket chemically inert and capable of performing over a wide temperature range, typically from -450°F to about +600°F.

In addition to the shapes described above, the gasket may be of a variety of shapes. They may also be fitted with items to assist in the placement within the workpiece, for example tabs, bolt holes, or adhesives. The following examples are intended to illustrate but not limit the present invention.

EXAMPLE 1

A two inch diameter insertable pipe flange gasket comprised of expanded porous PTFE was made. An outershell die was first manufactured using ANSI B16.5-1981 code for class 150 flange and bolt circle dimensions and is best understood by referring to Figure 4. The dimensions of the die well R was 0.11 inches (1 inch= 25.4 mm).

A rod approximately 13 inches in length of porous PTFE having a 3/8 inch diameter was made in accordance to the teachings of U.S. Patent 4,187,390 and was not heat treated to above its crystalline melt point. The rod was inserted into the well 42 of the outer shell die 40 shown in Figure 4. The ends of the rod were tapered to an angle of 30° each, so that when joined together, there existed a smooth transition in cross section. The inner shell 50 also having a die well, was then placed on top of and into the outer shell 40 containing the PTFE rod so that the inner shell covered in its entirety the porous PTFE rod and had a larger volume of PTFE in the well region than at the edges of the shell.

The die combination was then placed in a hydraulic press at an ambient temperature of 24°C and a force of 2050 psi (14.10⁶ Pa) across 4.35 in.² or 8900 lbs.f (4000 Kg) was applied perpendicular to the plane of the die. The load was applied for one minute.

After one minute, the load was released from the die and the die assembly was removed from the press. The shells of the die were separated and the gasket of variable density was removed.

For each region of the resulting gasket (i.e. densified region and undensified region), density measurements were taken on four random samples.

The dimensions (length, height, and width) was computed for each sample by using a vernier caliber. The volume for each sample was calculated and the weight of each sample using an analytical balance was measured. Density was calculated by the formula P = Wt./Vol. An average density was calculated for each region. All density measurements are summarized in Table 1. The specific regions are identified by letter in Figure 1.

EXAMPLE 2

An insertable gasket was made from a rod of expanded porous PTFE similar to that described above. The die well was 0.385 inches wide with a radius R of .120.

In the manufacture of this gasket, the rod material was placed in the outer shell, with the inner shell on top. The die combination was then pre-loaded with a 2.5 psi (17.10³ Pa) (or 11 pounds (5 kg)) force applied perpendicular to the die for 10 seconds to prevent shrinking when heat treated. The die assembly was then placed in an air-recirculatory oven set at a temperature of 400°C after which a 1130 psi (8.10⁶ Pa) (or 4920 lbs. (2200 kg)) load was applied to the die assembly for one minute. Density results of Example 2 are also summarized in Table 1. Reference again should be made to Figure 1 to identify the regions.

## TABLE 1

### Density g/cc

| | Region A | Region B | Region A |
|---|---|---|---|
| Example 1 | .6-.7 | 1.5-2.1 | .6-.7 |
| Example 2 | .5-.6 | 1.2-1.3 | .5-.6 |
| Example 3 | .7 | 1.8 | .7 |

EXAMPLE 3 - SEALABILITY TEST FOR GAS TESTING

The sealability of the inventive gasket as well as the sealability of presently commercially available gaskets were tested using a modified version of ASTM F37-82. The apparatus used for testing can best be understood by reference to Figure 6. The sample gasket 70 made in accordance with Example 1, was placed on the bottom platen 71 of which the square area of the gasket was measured to be 5.5 sq. in. The bottom platen 71 was raised to meet the top platen 72. The means for raising the lower platen for this experiment was a hydraulic cylinder.

An initial load of 5000 lbs. (2300 kg) across the 5.5 square inch area was first applied. An internal air pressure of 30 psi ($207.10^3$ Pa) was then applied to the gasket by opening valve 73 while valve 74 was closed. The water level in the manometer varies with leakage through the gasket. After 30 minutes, the increase in water height was noted and recorded. Valve 74 was opened and the system was allowed to equilibrate.

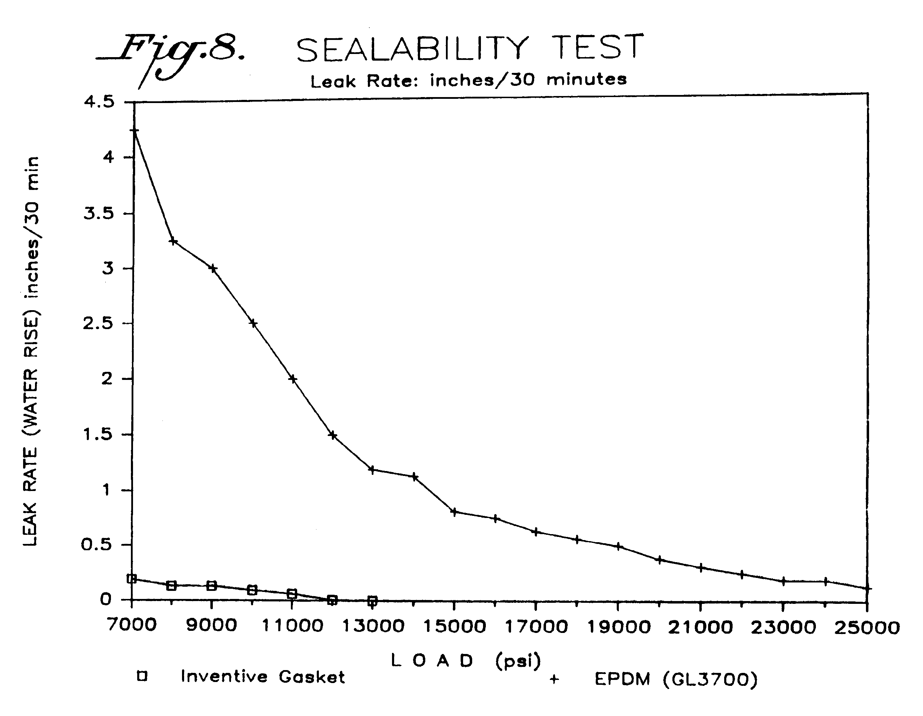

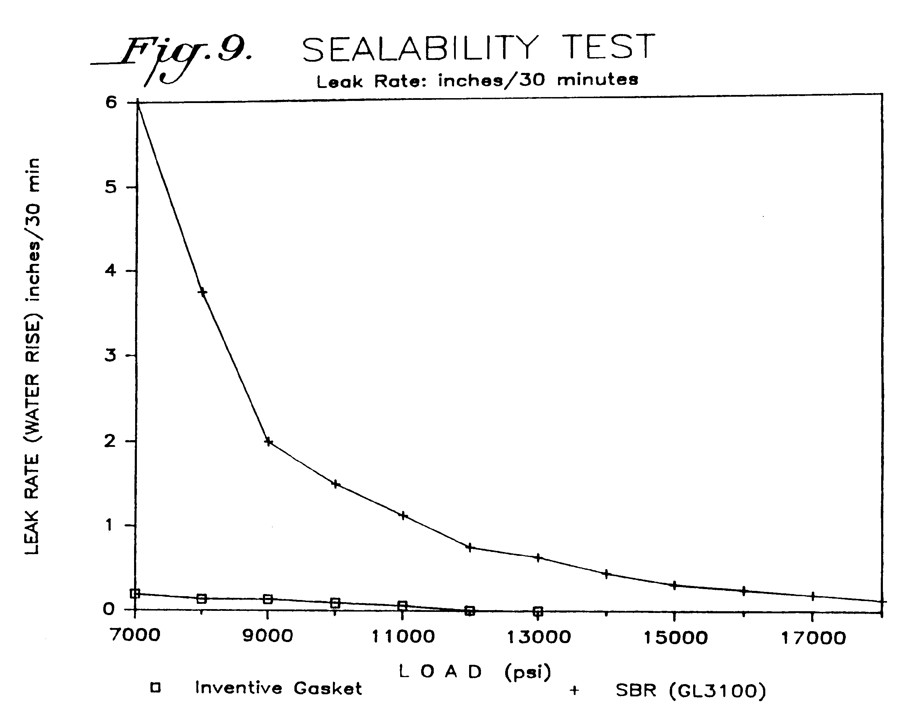

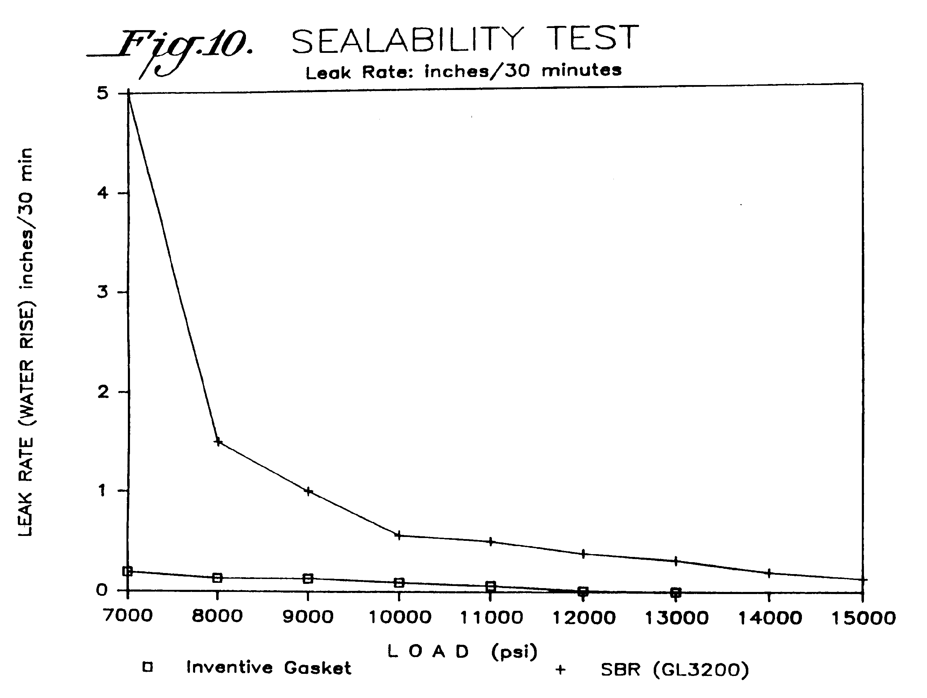

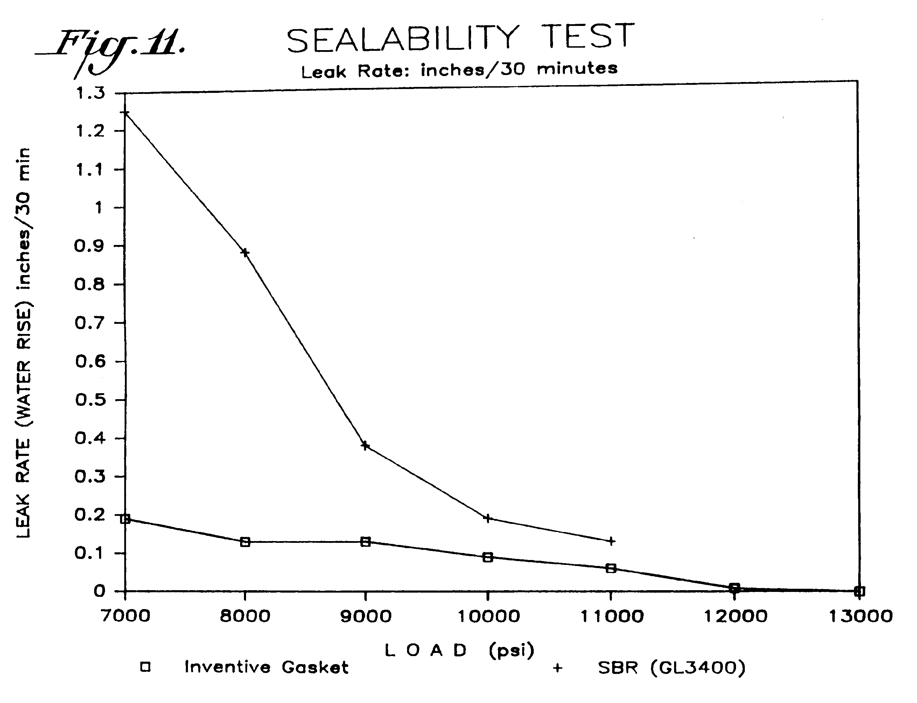

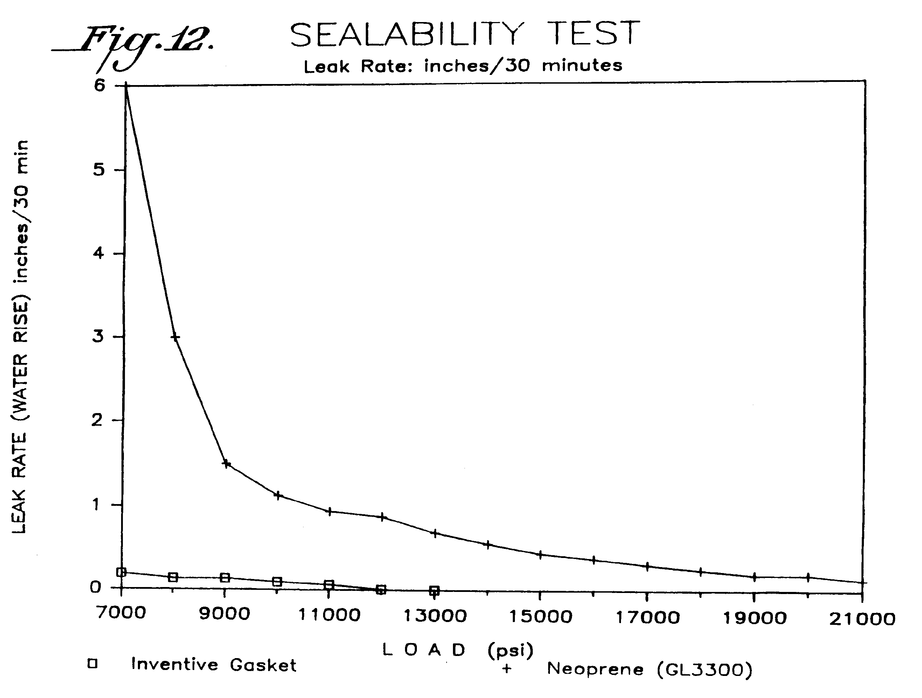

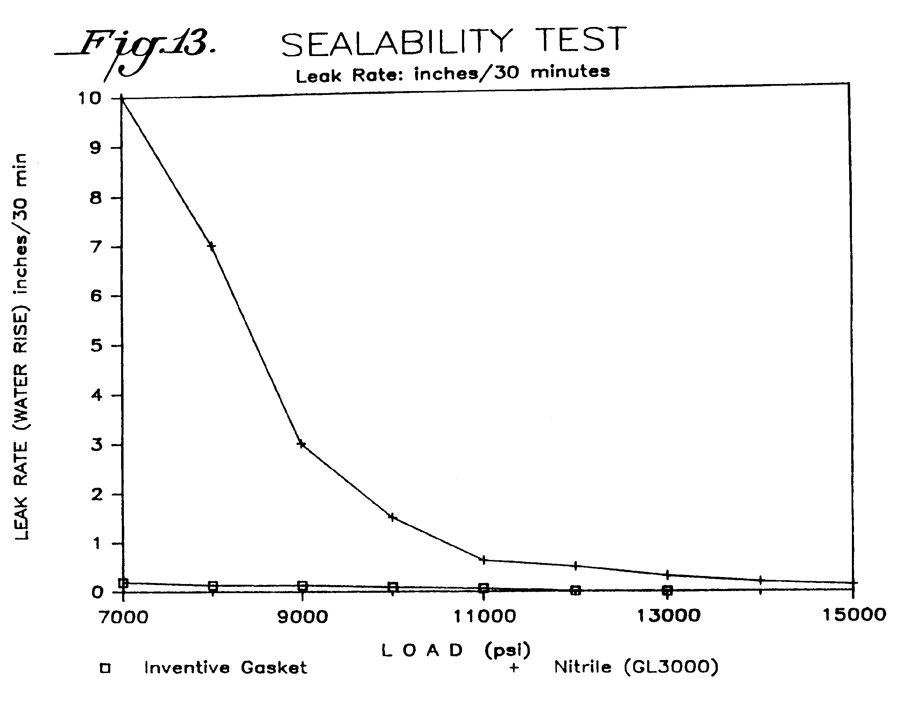

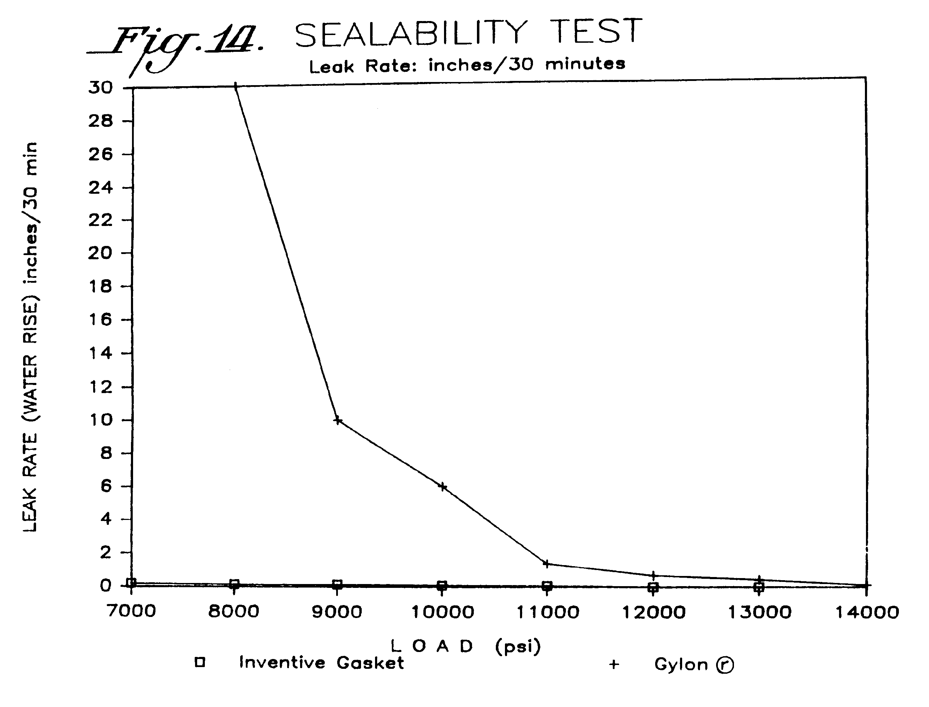

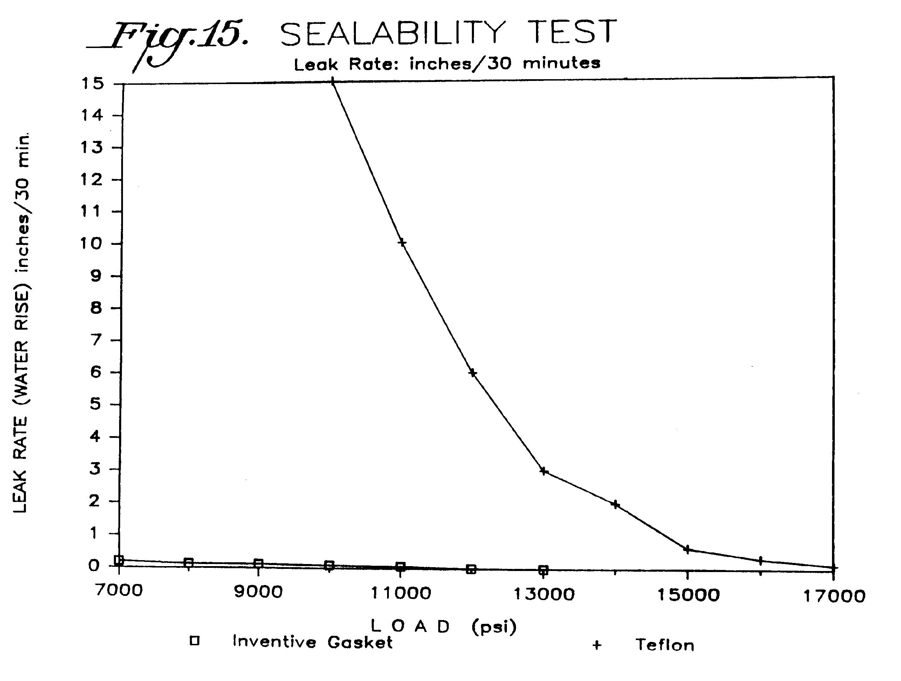

This test procedure was repeated and involved increasing the applied load pressure at 1000 psi ($6,9 \cdot 10^6$ Pa) increments. Thirty minutes after each increased increment, manometer measurements were taken. Test results were terminated when the water rise was less than 1/32 inch per 30 minute time period. Comparative tests using other commerical gaskets of similar dimensions were also conducted under the same conditions. Results of all tests are presented in Figures 7-15. Reviewing the results, the compressed asbestos, EPDM, SBR, Neoprene rubber, nitrile, Gylon® and Teflon® require loads greater than that of the inventive gasket to obtain a leak rate below 1/8 inch water rise during a 30 minute time period.

The inventive gasket obtains a leak rate of less than 1/16 water rise at 11,000 psi ($76.10^6$ Pa) for a 30 minute time period.

EXAMPLE 4 - FILLED INSERTABLE GASKET

An insertable O-ring gasket was made comprising 80% porous PTFE by weight and 15% by weight of graphite.

A rod of porous PTFE not heat treated to above its crystalline melt point and filled with graphite was placed into the outershell die described above. The rod of material was wrapped twice within the shell so that two layers of porous PTFE-graphite filled the well. An inner shell was placed within the outer so as to contain the graphite filled porous PTFE and a 15,000 lb (6.800 kg). load was then placed over the die for one minute.

The resulting structure was rigid in certain areas where they were selectively densified and compressible in others.

Results of the densified and undensified regions are found in Table 1.

**Claims**

1. A gasket formed from a flexible polymeric material in which the gasket comprises at least one first region (A) and at least one second region (B) which has a lower density than said first region for enabling an effective seal at low compressive loads characterised in that said polymeric material is a body of porous polytetrafluoroethylene which is normally deformable under its own weight; and said first region (12,22,32) is densified to enable the gasket to support itself against deformation under its own weight .

2. A gasket as claimed in claim 1, in which said second region has a density which is at least twice the density of said first region.

3. A gasket as claimed in claim 1 or 2, in which the gasket is substantially leakproof at pressures above 12,000 psi (83·10⁶ Pa).

4. A gasket as claimed in any of claims 1 to 3, in which the porous polytetrafluoroethylene is heated above its crystalline melt point.

5. A gasket as claimed in any preceding claim in which the porous polytetrafluoroethylene contains a filler.

6. A gasket as claimed in claim 5, in which the filler is graphite, carbon black, asbestos, silica, pigment, mica, titanium dioxide, glass, potassium titanate, dielectric fluid or polysiloxane.

7. A gasket as claimed in any preceding claim, in which the gasket is an insertable gasket.

8. A gasket as claimed in any preceding claim, in which the gasket is in the form of a rod.

9. A gasket as claimed in any of claims 1 to 7, in which the gasket is in the form of a closed loop.

10. A gasket as claimed in claim 9, in which the closed loop is circular.

11. A gasket as claimed in claim 9 or 10, wherein the gasket has inner and outer edges (12) which have a density greater than the density of an intermediate section (14) of said loop.

12. A gasket as claimed in claim 9 or 10, wherein the gasket has an intermediate section (24) which has a density greater than the density of inner and outer edges (22).

**Patentansprüche**

1. Eine Dichtung, die aus einem flexiblen polymeren Material gebildet ist, wobei die Dichtung wenigstens einen ersten Bereich (A) und mindestens einen zweiten Bereich (B) aufweist, der eine geringere Dichte als der genannte erste Bereich aufweist, um zu einer wirksamen Abdichtung bei geringen Druckbelastungen zu führen,
**dadurch gekennzeichnet,**
daß das genannte polymere Material aus einem Körper aus porösem Polytetrafluorethylen besteht, der normalerweise unter seinem Eigengewicht deformierbar ist; und daß der genannte erste Bereich (12, 22, 32) verdichtet ist, um es der Dichtung zu ermöglichen, sich selbst gegen Deformation unter ihrem Eigengewicht zu tragen.

2. Eine Dichtung wie in Anspruch 1 beansprucht, in welcher der genannte zweite Bereich eine Dichte aufweist, welche zumindest das zweifache der Dichte des genannten ersten Bereiches ist.

3. Eine Dichtung wie in Anspruch 1 oder 2 beansprucht, in welcher die Dichtung bei Drücken oberhalb 12.000 psi (83 x 10⁶ pa) im wesentlichen lecksicher ist.

4. Eine Dichtung wie in einem der Ansprüche 1 bis 3 beansprucht. in welcher das poröse Polytetrafluorethylen oberhalb seines Kristallisationsschmelzpunktes erwärmt ist.

5. Eine Dichtung wie in einem der vorhergehenden Ansprüche beansprucht. in welcher das poröse Polytetrafluorethylen einen Füller enthält.

6. Eine Dichtung wie in Anspruch 5 beansprucht, in welcher der Füller Graphit, Ruß, Asbest, Silika, Pigment, Glimmer, Titandioxid, Glas, Kaliumtitanat, ein dielektrisches Fluid oder Polysiloxan ist.

7. Eine Dichtung wie in einem der vorhergehenden Ansprüche beansprucht, in welcher die Dichtung eine einsetzbare Dichtung ist.

8. Eine Dichtung wie in einem der vorhergehenden Ansprüche beansprucht, in welcher die Dichtung in der Form einer Stange ist.

9. Eine Dichtung wie in einem der Ansprüche 1 bis 7 beansprucht, in welcher die Dichtung in der Form einer geschlossenen Schleife ist.

10. Eine Dichtung wie in Anspruch 9 beansprucht, in welcher die geschlossene Schleife kreisförmig ist.

11. Eine Dichtung wie in Anspruch 9 oder 10 beansprucht, in welcher die Dichtung innere und äußere Ränder (12) aufweist, die eine Dichte besitzen, die größer ist als die Dichte eines Zwischen-Abschnittes (14) der genannten Schleife.

12. Eine Dichtung wie in Anspruch 9 oder 10 beansprucht, in welcher die Dichtung einen Zwischen-Abschnitt (24) aufweist, der eine Dichte besitzt, die größer ist als die Dichte von inneren und äußeren Rändern (22).

## Revendications

1. Joint d'étanchéité formé à partir d'un matériau polymère flexible dans lequel le joint comprend au moins une première région (A) et au moins une seconde région (B) dont la densité est plus basse que celle de ladite première région afin de permettre une jonction étanche efficace sous de faibles charges compressives, caractérisé en ce que ledit matériau polymère est un corps en polytetrafluoréthylène poreux qui est normalement déformable sous l'effet de son propre poids et ladite première région (12, 22, 32) est densifiée pour permettre au joint de devenir autonome à l'encontre d'une déformation sous l'effet de son propre poids.

2. Joint d'étanchéité selon la revendication 1, dans lequel ladite seconde région présente une densité qui est au moins double de la densité de ladite première région.

3. Joint selon la revendication 1 ou 2, dans lequel ce joint est sensiblement étanche aux fuites sous des pressions au dessus de $83 \times 10^6$ Pa (12.000 psi).

4. Joint selon l'une quelconque des revendications 1 à 3, dans lequel le polytetrafluoréthylène poreux est chauffé au dessus de son point de fusion cristallin.

5. Joint selon l'une quelconque des revendications précédentes, dans lequel le polytetrafluoréthylène poreux contient une charge.

6. Joint selon la revendication 5, dans lequel la charge est le graphite, le noir de carbone, l'amiante, la silice, un pigment, le mica, le bioxyde de titane, le verre, le titanate de potassium, un fluide diélectrique ou un polysiloxane.

7. Joint selon l'une quelconque des revendications précédentes, qui est un joint insérable.

8. Joint selon l'une quelconque des revendications précédentes, qui est sous forme d'une tige.

9. Joint selon l'une quelconque des revendications 1 à 7, qui est sous forme d'une boucle fermée.

10. Joint selon la revendication 9, dans lequel la boucle fermée est circulaire.

11. Joint selon la revendication 9 ou 10, qui présente des bords intérieur et extérieur (12) dont la densité est supérieure à celle d'une section intermédiaire (14) de ladite boucle.

12. Joint selon la revendication 9 ou 10, qui comporte une section intermédiaire (24) dont la densité est plus grande que celle des bords intérieur et extérieur (22).

Fig.1.

Fig.2.

Fig.1A.

Fig.2A.

Fig.3.

Fig.3A.

_Fig.4._

_Fig.5A._

_Fig.5._

_Fig.4A._

_Fig.6._

## Fig.7. SEALABILITY TEST

Leak Rate: inches/30 minutes

LEAK RATE (WATER RISE) inches/30 min

LOAD (psi)

□ Inventive Gasket    + Compressed Asbestos

Fig.8. SEALABILITY TEST
Leak Rate: inches/30 minutes

LOAD (psi)
□ Inventive Gasket    + EPDM (GL3700)

LEAK RATE (WATER RISE) inches/30 min

_Fig.9._ SEALABILITY TEST

Leak Rate: inches/30 minutes

LEAK RATE (WATER RISE) inches/30 min

L O A D (psi)

□ Inventive Gasket     + SBR (GL3100)

EP 0 416 031 B1

Fig.10. SEALABILITY TEST
Leak Rate: Inches/30 minutes

LEAK RATE (WATER RISE) inches/30 min

LOAD (psi)

□ Inventive Gasket    + SBR (GL3200)

*Fig.11.*

SEALABILITY TEST

Leak Rate: inches/30 minutes

_Fig. 12._

SEALABILITY TEST

Leak Rate: inches/30 minutes

□ Inventive Gasket + Neoprene (GL3300)

LOAD (psi)

LEAK RATE (WATER RISE) inches/30 min

Fig. 13.

SEALABILITY TEST

Leak Rate: inches/30 minutes

LEAK RATE (WATER RISE) inches/30 min

LOAD (psi)

□ Inventive Gasket    + Nitrile (GL3000)

_Fig.14._ SEALABILITY TEST

Leak Rate: inches/30 minutes

LEAK RATE (WATER RISE) inches/30 min

LOAD (psi)

□  Inventive Gasket          +     Gylon ⓡ

EP 0 416 031 B1

## _Fig.15._  SEALABILITY TEST

### Leak Rate: inches/30 minutes

LEAK RATE (WATER RISE) inches/30 min.

L O A D  (psi)

□  Inventive Gasket        +    Teflon

EP 0 416 031 B1